## Europäisches Patentamt
## European Patent Office
## Office européen des brevets

(11) Numéro de publication: **0 403 352**
**A1**

(12) **DEMANDE DE BREVET EUROPEEN**

(21) Numéro de dépôt: **90401593.0**

(51) Int. Cl.5: **G06F 15/62**

(22) Date de dépôt: **11.06.90**

(30) Priorité: **12.06.89 FR 8907728**

(43) Date de publication de la demande:
**19.12.90 Bulletin 90/51**

(84) Etats contractants désignés:
**BE DE FR GB NL SE**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Amans, Jean-Louis**
**8 Bd. Roger Salengro**
**F-38100 Grenoble(FR)**
Inventeur: **Caquineau, Christophe**
**2 rue de Narvik**
**F-38000 Grenoble(FR)**

(74) Mandataire: **Mongrédien, André et al**
**c/o BREVATOME 25, rue de Ponthieu**
**F-75008 Paris(FR)**

(54) **Procédé de détermination d'un espace à partir d'un espace discret connu pour la réconstruction d'images bi ou tridimensionnelles, dispositif de mise en oeuvre et application du procédé.**

(57) L'invention concerne un procédé et un dispositif de détermination d'un espace à partir d'un espace discret connu pour la reconstruction d'images bi ou tridimensionnelles. Le procédé comporte pour cela une phase élémentaire itérative ayant pour but de déterminer la contribution à la valeur d'un élément de l'espace inconnu, à partir de la valeur de l'élément (et éventuellement de son voisinage) de l'espace connu en opérant les étapes successives de prédétermination de paramètres (V1 à V4) ; de détermination d'indice d'un point de l'espace connu par une relation généralisée englobant les principaux dispositifs d'acquisition $V1+ev2/V3+ev4$ ; de détermination des contributions par interpolation sur les points voisins ; pondération des contributions, et d'addition de la contribution pondérée à la valeur de l'élément de l'espace inconnu en cours de traitement.
Application à l'imagerie médicale et aux contrôles industriels non destructifs.

EP 0 403 352 A1

FIG.1

# PROCEDE DE DETERMINATION D'UN ESPACE A PARTIR D'UN ESPACE DISCRET CONNU POUR LA RECONSTRUCTION D'IMAGES BI OU TRIDIMENSIONNELLES, DISPOSITIF DE MISE EN OEUVRE ET APPLICATION DU PROCEDE

La présente invention a pour objet un procédé de détermination d'un espace à partir d'un espace discret connu pour la reconstruction d'images bi ou tridimensionnelles. Elle a également pour objet un dispositif de mise en oeuvre et une application du procédé.

Dans des applications telles que l'imagerie médicale permettant de reconstituer des images du corps humain ou d'imagerie industrielle pour contrôle non destructif de pièces l'on fait appel à des techniques de reconstruction d'images.

Ces reconstructions d'images se font à partir de projections obtenues par un dispositif d'acquisition émettant et captant un rayonnement d'irradiation. Ces projections sont obtenues à la suite d'une série de mesures de l'atténuation du rayonnement à travers l'objet à contrôler, l'incidence du rayonnement ayant été modifiée entre chaque série de mesures.

Les dispositifs d'acquisition sont constitués d'une source de rayonnement X ou $\gamma$ ou à neutrons. Ils comportent également un ou plusieurs détecteurs.

Lorsqu'il n'y a qu'un seul détecteur, la source se déplace linéairement et émet à chaque déplacement pour obtenir une projection à partir d'une série de mesures ; la géométrie du dispositif d'acquisition est dite parallèle.

Lorsqu'il y a une barrette de détecteurs, la source est fixe, la série de mesure est obtenue à partir d'une seule émission, la géométrie d'acquisition est dite en éventail.

En présence d'une matrice de détecteurs, la géométrie est dite conique.

Généralement, l'on cherche à avoir un grand nombre de projections afin d'obtenir la meilleure reconstitution possible d'images de l'objet ainsi traversé par le rayonnement. Pour cela, l'on fait tourner la source par petits incréments d'angles autour de l'objet afin d'obtenir des séries de mesures sous incidences différentes.

D'une manière générale, la reconstruction d'images (images bidimensionnelles) ou de volumes (images tridimensionnelles) à partir de projections fait appel à deux grandes classes de méthodes :
- la classe des méthodes analytiques,
- la classe des méthodes algébriques.

L'analyse de ces méthodes analytiques et algébriques montre que, outre les opérations de filtrage, réarrangement, masquage, etc..., les opérations de base sont la reprojection et la rétroprojection.

- La reprojection (ou projection) est une opération qui permet d'obtenir, à partir d'une image ou d'un volume, les projections relatives à ces espaces dans une géométrie donnée.

Dans le cas de l'imagerie X, chaque point de la projection correspond à une estimation de l'atténuation énergétique d'un faisceau de rayons X sur un trajet linéaire dans l'espace considéré supposé connu.

Cette opération de reprojection est utilisée en particulier dans les techniques itératives (méthode algébrique) et dans certaines méthodes de reconstruction de volumes par synthèse et inversion de la transformée de RADON.

L'on pourra se référer à la thèse de P. Grangeat soutenue à l'Ecole Nationale Supérieure des Télécommunications le 30 juin 1987 ayant pour titre "Analyse d'un système d'imagerie 3D par reconstruction à partir de radiographies X en géométrie conique". On pourra également se reporter à la demande de brevet FR8707134 publiée sous le n° 2615619.

- La rétroprojection (ou épandage) est le traitement dual de la reprojection. Elle consiste à redistribuer l'information issue des projections aux pixels images (ou aux voxels volumes) appartenant à une droite d'acquisition.

Cette opération est utilisée dans l'ensemble des méthodes de reconstruction (images ou volumes) à partir de projections. Elle est parfois associée, dans le cadre des méthodes analytiques en particulier, à des opérations de filtrage et de réarrangement de données.

Ces deux opérations (reprojection et rétroprojection) sont étroitement liées avec la géométrie du système d'acquisition ayant engendré les données initiales. Cette géométrie comme cela a été dit précédemment peut être :
- parallèle,
- en éventail (pas linéaire constant ou pas angulaire constant),
- conique (en 3-D).

Le volume de données à traiter, et la complexité des procédés de reconstruction, en font un problème nécessitant la mise en oeuvre de moyens de traitement performants.

EP 0 403 352 A1

La solution naturelle qui consiste à utiliser des processeurs vectoriels non dédiés (standards) pour mettre en oeuvre ces procédés conduit à un rapport prix/performance élevé. Cette solution assure une certaine souplesse (car ils sont programmables souvent en langage évolué), mais ceci au détriment de la performance et du prix.

Par ailleurs, il existe à l'heure actuelle des développements de machines spécifiques. Des processeurs de rétroprojection bidimensionnelle spécifiques ont été réalisés dans le cadre de systèmes tomographiques. Par exemple, la société STAR Technologie diffuse un rétroprojecteur (géométrie éventail) associé à un processeur vectoriel.

L'ensemble des produits existant sur le marché sont, de par leur conception, liés à une géométrie d'acquisition, et n'ont pas en conséquence été conçus pour permettre une mise en oeuvre efficace des opérations de reprojection et rétroprojection, dans les différentes géométries.

L'on rappelle que les procédés permettant de réaliser des reprojections et des rétroprojections se caractérisent par un ensemble de phases itératives imbriquées : phase sur les projections -phase sur les plans images uniquement dans le cas 3D -phase sur les lignes-images -phase sur les éléments de la ligne- la phase sur les projections peut être imbriquée n'importe où avant la phase sur les éléments.

La phase de plus bas niveau porte sur la correspondance des éléments de ligne et est qualifiée de phase élémentaire. Cette phase met en correspondance deux ensembles monodimensionnels (que l'on peut assimiler à des lignes) dont l'un est connu. Les opérations internes à cette phase permettent de calculer une contribution à chaque élément de l'ensemble monodimensionnel inconnu. Cette phase est répétée de l'ordre de $N^3$ (respectivement de l'ordre de $N^4$ fois) lors de la reconstruction d'une image de taille $N^2$ (respectivement d'un volume de taille $N^3$) à partir de N projections.

La présente invention consiste en un procédé et en un dispositif de détermination d'un espace à partir d'un espace connu discret pour la reconstruction d'image ou de volume permettant de remédier aux inconvénients apportés par les méthodes et les dispositifs usuels de reconstructions d'images.

En effet le procédé conforme à l'invention permet d'être utilisé quelle que soit la géométrie du dispositif d'acquisition, parallèle 2D, 3D, éventail 2D, conique 3D. Le dispositif de mise en oeuvre du procédé est conçu pour être utilisé quel que soit le dispositif d'acquisition contrairement à l'art antérieur.

La présente invention a donc pour objet un procédé de détermination d'un espace à partir d'un espace discret connu par reprojection ou rétroprojection, pour la reconstruction d'une image bidimensionnelle ou tridimensionnelle d'un corps à analyser, à partir d'un ensemble de projections obtenu, au moyen d'un dispositif d'acquisition de géométrie définie comportant une source de rayonnement et un ensemble de détecteurs, l'un des espaces étant défini par un ensemble de points élémentaires repérés respectivement suivant trois axes par des indices (l, m, n) correspondant aux coordonnées suivant ces axes : l'autre espace étant défini par un ensemble de points élémentaires que l'on repère également respectivement par des indices (i,j,k) suivant trois axes de cet espace, ces indices (i, j, k) correspondant aux coordonnées suivant ces axes, la détermination de l'espace inconnu est obtenue par le calcul de la valeur numérique de chaque point de l'espace inconnu à partir de la détermination des contributions apportées par les valeurs numériques de points correspondants de l'espace connu, le procédé étant caractérisé en ce qu'il comporte une phase élémentaire consistant à déterminer de façon itérative pour chaque point d'un ensemble monodimensionnel de points de l'espace inconnu portés par un axe E donné de cet espace, la contribution apportée par le point correspondant et éventuellement par les points voisins d'un ensemble monodimensionnel de points de l'espace connu portés par un axe F de cet espace, cette phase comportant de façon itérative pour chaque point les étapes suivantes :

- déterminer l'indice associé à la coordonnée sur l'axe F du point correspondant de l'espace connu, en prenant la partie entière ADR de l'expression généralisée $a_0(e)$, avec

$$a_0(e) = \frac{v1 + ev2}{v3 + ev4}$$

e étant l'indice d'itération correspondant à la coordonnée sur l'axe E du point considéré de l'espace inconnu et V1, V2, V3, V4 étant des paramètres constants dans la phase élémentaire, l'ensemble de ces paramètres étant déterminé préalablement à cette phase en fonction de la géométrie d'acquisition choisie ; du type d'opération (reprojection ou rétroprojection) effectuée et des ensembles monodimensionnels considérés,

- déterminer la contribution C à apporter à la valeur numérique du point considéré de l'espace inconnu par interpolation sur les valeurs numériques du point correspondant d'indice ADR et éventuellement des points voisins,

- pondérer cette contribution par un facteur f déterminé par la relation suivante :

4

$$f = \frac{V5}{(V6 + eV7)^2}$$

V5, V6, V7 étant des paramètres constants dans la phase élémentaire, l'ensemble de ces paramètres étant déterminé préalablement à cette phase en fonction de la géométrie d'acquisition choisie, du type d'opération et des ensembles monodimensionnels considérés,

- additionner cette contribution pondérée à la valeur numérique du point considéré de l'espace inconnu, déterminée lors de phases élémentaires précédentes ayant mis en correspondance le point de l'espace inconnu à des points d'autres espaces monodimensionnels connus, l'ensemble des contributions obtenues à la fin du procédé de détermination de l'espace inconnu constituant la valeur finale de ce point.

Selon une première variante du procédé de détermination d'un espace à partir d'un espace discret connu, la phase élémentaire représente une opération de rétroprojection en géométrie parallèle, l'espace connu étant un ensemble de données de projection indicé par l,m,n ; m et n étant fixés, l'espace inconnu étant l'espace image indicé par i, j, k, (j et k) ou (i et k) étant fixés ; l'indice recherché $a_0(e)$ est soit l'indice $l_0(j)$ lorsque i et k sont fixés, l'axe E étant indicé par j et l'axe F par l, soit l'indice $l_0(i)$ lorsque j et k sont fixés, l'axe E étant indicé par i et l'axe F par l ; et l'on choisit alors :

$V3 = 1$

$V4 = 0$

et pour i fixé à $i_0$, $k = 0$, $m = 0$, $n = n_0$, $l_0(j)$ étant recherché

$V1 = L_0 + i_0 \Delta l$

$V2 = \Delta J$

$e = j$

ou pour j fixe à $j_0$, $k = 0$, $m = 0$, $n = n_0$, $l_0(i)$ étant recherché

$V1 = L_0 + j_0 \Delta J$

$V2 = \Delta l$

$e = i$

les termes $L_0$, $\Delta l$, $\Delta J$ étant prédéterminés, $l_0$ étant un nombre entier réel de partie entière l.

Selon une deuxième variante de réalisation du procédé de détermination d'un espace à partir d'un espace discret connu, la phase élémentaire représente une opération de reprojection en géométrie parallèle, l'espace connu étant l'espace image indicé par l, m, n ; (m et n) ou (l et m) étant fixés, l'espace inconnu étant l'ensemble de données de projection indicée i, j, k, j et k étant fixés ; l'indice $a_0(e)$ recherché est l'indice $l_0(i)$ ou $n_0(i)$, l'axe E est alors indicé par i et l'axe F est indicé par l ou n et l'on choisit alors :

m fixé à 0, n à $n_0$, j à $j_0$, k à 0, on cherche $l_0(i)$

$V3 = 1$

$V4 = 0$

$V1 = h_1 (n_0, j_0)$

$V2 = \Delta L_1 (j_0)$

$e = i$

ou

m fixé à 0, l à $l_0$, j à $j_0$, k à 0; on cherche $n_0(i)$

$V3 = 1$

$V4 = 0$

$V1 = h_2 (l_0, j_0)$

$V2 = \Delta L_2 (j_0)$

$e = i$

Les termes $h_1$, $h_2$, $\Delta L_1$ et $\Delta L_2$ étant prédéterminés et $n_0$ et $l_0$ sont des nombres réels de partie entière respectivement n et l.

Selon une troisième variante de réalisation du procédé de détermination d'un espace à partir d'un espace discret connu, la phase élémentaire représente une opération de rétroprojection en géométrie en éventail à pas linéaires constants, l'espace connu est l'ensemble de données de projection indicées par l,m,n ; m et n étant fixés, l'espace inconnu étant l'espace image indicé par i, j, k, (i et k) ou (j et k) étant fixés, l'indice recherché $a_0(e)$ est soit l'indice $l_0(i)$ soit $l_0(j)$ l'axe E étant indicé par i ou par j et l'axe F par l et l'on choisit alors :

$k = 0$, $m = 0$, $n = n_0$, $j = j_0$, $l_0(i)$ étant recherché,

$V1 = h_3 (j_0, n_0)$

$V2 = h_4 (n_0)$

$V3 = h_5 (j_0, n_0)$

$V4 = h_6 (n_0)$

$e = i$

ou : $k = 0$, $m = 0$, $n = n_0$, $i = i_0$, $l_0(j)$ étant recherché,

$V1 = h'_3 (i_0, n_0)$

$V2 = h'_4 (n_0)$

$V3 = h'_5 (i_0, n_0)$

$V4 = h'_6 (n_0)$

$e = j$.

les termes $h_3$, $h_4$, $h_5$, $h_6$, $h'_3$, $h'_4$, $h'_5$, $h'_6$ étant prédéterminés et $l_0$ est un nombre réel de partie entière l.

Selon une quatrième variante de réalisation du procédé de détermination d'un espace à partir d'un espace discret connu, la phase élémentaire représente une opération de reprojection en géométrie en éventail à pas linéaires constants, l'espace connu étant l'espace image indicé par l, m, n ; (m et n) ou (l et m) étant fixés, l'espace inconnu étant l'ensemble de données de projection indicées par i, j, k ou j et k sont fixés, l'indice recherché $a_0(e)$ est l'indice $l_0(i)$ ou $n_0(i)$, l'axe E étant indicé i et l'axe F par l ou n et l'on choisit alors :

m fixé à 0, n à $n_0$, j à $j_0$, k à 0, $l_0(i)$ étant recherché,

$V1 = h_7 (n_0, j_0)$

$V2 = h_8 (n_0, j_0)$

$V3 = h_9 (j_0)$

$V4 = h_{10} (j_c)$

$e = i$

ou :

m fixé à 0, l à $l_0$, j à $j_0$, k à 0, $n_0(i)$ étant recherché,

$V1 = h'_7 (l_0, j_0)$

$V2 = h'_8 (l_c, j_0)$

$V3 = h'_9 (j_0)$

$V3 = h'_{10} (j_0)$

$e = i$

Les termes $h_7$, $h_8$, $h_9$, $h_{10}$, $h'_7$, $h'_8$, $h'_9$, $h'_{10}$ étant prédéterminés et $n_0$, $l_0$ étant des nombres réels de partie entière respectivement n et l.

Selon une cinquième variante de réalisation du procédé de détermination d'un espace à partir d'un espace discret connu, la phase élémentaire représente une opération de rétroprojection en géométrie conique ; l'espace inconnu étant un espace image indicé par i, j, k (j et k étant fixés), l'espace connu étant l'espace de projection indicé par l, m, n (n étant fixé et m fixé puisque fonction de j et k), l'indice recherché $a_0(e)$ est l'indice $l_0(i)$ l'axe E est indicé par i et l'axe F par l, et l'on choisit alors :

$V3 = 1$

$V4 = 0$

$$V1 = \frac{Z_0 \, C - Q_0}{\Delta Q}$$

$$V2 = \frac{C \cdot \Delta Z}{\Delta Q}$$

les termes $Z_0$, C, $Q_0$, $\Delta Z$ et $\Delta Q$ étant prédéterminés et $l_0$ étant un nombre réel dont la partie entière est l.

Selon une sixième variante de réalisation du procédé de détermination d'un espace à partir d'un espace discret connu, la phase élémentaire représente une reprojection en géométrie conique, l'espace inconnu étant l'espace de projection indicé par i, j, k, (j et k étant fixés), et l'espace connu étant l'espace image indicé par l, m, n (m étant fixé, n étant fixé puisque fonction de j et k) ; l'indice recherché $a_0(e)$ est l'indice $l_0(i)$ l'axe E est indicé par i et l'axe F par l et l'on choisit alors :

$V3 = 1$

$V4 = 0$

$$V1 = \frac{Q_0 C - Z_0}{\Delta Z}$$

$$V2 = C \times \frac{\Delta Q}{\Delta Z}$$

les termes $Z_0$, $Q_0$, C, $\Delta Z$ et $\Delta Q$ étant prédéterminés et $I_0$ étant un nombre réel dont la partie entière est I.

Selon une septième variante de réalisation du procédé de détermination d'un espace à partir d'un espace discret connu, pour une géométrie parallèle et conique dans le cas où la phase élémentaire représente une rétroprojection et pour une géométrie parallèle lorsque cette phase représente une reprojection, le facteur de pondération f est déterminé en prenant :

V7 = 0

V6 = 1 et V5 est prédéterminé.

Selon une huitième variante de réalisation du procédé de détermination d'un espace à partir d'un espace discret connu dans l'étape de pondération pour une géométrie éventail dans le cas d'une rétroprojection, le facteur de pondération f est déterminé en prenant :

V5 prédéterminé à partir des paramètres du dispositif d'acquisition

V6 = V3

V7 = V4

Selon une neuvième variante de réalisation du procédé de détermination d'un espace à partir d'un espace discret connu, dans l'étape de pondération pour une géométrie en éventail et conique dans le cas de la reprojection, le facteur de pondération f est déterminé en prenant :

V5 = 1

V6 = 1

V7 = 0

Dans ce cas, la pondération peut être reportée en dehors de la phase élémentaire.

L'invention consiste en outre en un dispositif de mise en oeuvre du procédé caractérisé en ce qu'il comporte outre le dispositif d'acquisition :

- des moyens de génération d'adresse recevant les paramètres V1 à V4, délivrant l'adresse ADR qui est la partie entière de $a_0(e)$ ;
- des moyens de mémorisation des valeurs numériques des points de l'espace connu, adressées par les moyens de génération, délivrant l'ensemble de $(\alpha + 1)$ valeurs numériques des points de l'espace connu de $V(ADR-\beta)$ à $V(ADR+\gamma)$ ($\beta$ et $\gamma$ entiers positifs ; $\beta + \gamma = \alpha$) correspondant à l'indice ADR, $\alpha$ étant l'ordre d'interpolation ;
- des moyens d'interpolation recevant les valeurs numériques $V(ADR-\beta)$ à $V(ADR+\gamma)$ contenues en mémoire et adressables par l'indice ADR et déterminant à la fin de l'interpolation une contribution non pondérée à la valeur numérique de chaque point correspondant de l'espace inconnu ;
- des moyens de pondération recevant chaque contribution non pondérée et les paramètres V5, V6, V7 pour délivrer chaque contribution pondérée ;
- des moyens de sommation pour additionner à la valeur numérique du point en cours de l'espace inconnu, la contribution pondérée relative à ce point en cours ;
- des moyens de mémorisation contenant la valeur en cours.

L'invention consiste en outre en un second dispositif de mise en oeuvre du procédé caractérisé en ce qu'il comporte outre le dispositif d'acquisition :

- des moyens de génération d'adresse recevant les paramètres V1 à V4 délivrant l'adresse ADR qui est la partie entière $a_0(e)$ ; ces mêmes moyens de générations d'adresse fournissant aussi les adresses des éléments de l'espace inconnu ;
- des moyens de mémorisation des valeurs numériques des points de l'espace connu et des valeurs numériques des points de l'espace inconnu, adressées par les moyens de génération d'adresse, délivrant ainsi les valeurs numériques de l'espace connu de $V(ADR-\beta)$ à $V(ADR+\gamma)$ ($\beta$ et $\gamma$ entiers positifs ; $\beta + \gamma = \alpha$) correspondant à l'indice ADR, $\alpha$ étant l'ordre d'interpolation, délivrant ainsi les valeurs numériques des données de l'espace inconnu correspondant aux calculs effectués et recevant les valeurs numériques de l'espace inconnu après traitement ;
- une unité opérative recevant les coefficients pour l'interpolation, recevant les paramètres V5, V6 et V7 pour pondérer la contribution et l'ajouter à la valeur du point en cours de traitement de l'espace inconnu, ces opérations étant effectuées intrinsèquement à cette unité opérative.

L'invention a également pour objet une application du procédé à la reconstruction par synthèse et inversion de la transformée de RADON.

La reconstruction par synthèse et inversion de la transformée comporte selon le procédé trois étapes :

- une première étape consistant en une reprojection bidimensionnelle en géométrie parallèle permettant d'obtenir la transformée de RADON ;

- une deuxième étape consistant en une rétroprojection bidimensionnelle en géométrie parallèle permettant d'obtenir des projections réarrangées ;

- une troisième étape consistant en une rétroprojection bidimensionnelle à géométrie parallèle permettant d'obtenir le volume final recherché.

D'autres caractéristiques et avantages de l'invention ressortiront mieux à la lecture de la description qui va suivre, donnée à titre illustratif et non limitatif. La description se réfère aux figures annexées dans lesquelles :

- la figure 1 représente les étapes principales du procédé sous forme d'une succession de blocs, chaque bloc correspondant à une étape particulière, conformément à l'invention,

- la figure 2 représente une figure géométrique permettant de rappeler le principe d'acquisition 2D en géométrie parallèle,

- la figure 3 représente une figure géométrique permettant de rappeler le principe d'acquisition 2D en géométrie éventail;

- la figure 4 représente une figure géométrique permettant de rappeler le principe d'acquisition 3D en géométrie conique,

- la figure 5 représente le cas d'une rétroprojection avec un dispositif d'acquisition à géométrie parallèle,

- la figure 6 représente une reprojection avec un dispositif à géométrie parallèle,

- la figure 7 représente une rétroprojection avec un dispositif à géométrie en éventail,

- la figure 8 représente une reprojection avec un dispositif à géométrie en éventail,

- la figure 9 représente le cas de rétroprojection et reprojection 3D en géométrie parallèle,

- la figure 10 représente le schéma d'adressage dans la phase élémentaire pour une rétroprojection 3D en géométrie conique,

- la figure 11 représente le schéma du dispositif de mise en oeuvre du procédé conforme à l'invention selon un premier mode de réalisation,

- la figure 11A représente le schéma d'un dispositif de mise en oeuvre du procédé selon un deuxième mode de réalisation ;

- la figure 12 montre l'espace volume à reconstruire de coordonnées x, y, z et l'espace projection connu de coordonnées p, q, $\Phi$ ;

- la figure 13 montre l'espace de Radon de coordonnées p, $\theta$, $\phi$ et le repère O, $\vec{i}$ , $\vec{j}$ $\vec{k}$ lié à l'espace du volume à reconstruire ;

- la figure 14 montre l'espace des projections réarrangées de coordonnées r, z, $\phi$ ;

- la figure 15 montre une reprojection parallèle d'un plan radiographique,

- la figure 16 montre une rétroprojection parallèle d'une partie d'un volume,

- la figure 17 montre une rétroprojection parallèle d'une partie du volume de rétroprojection réarrangées.

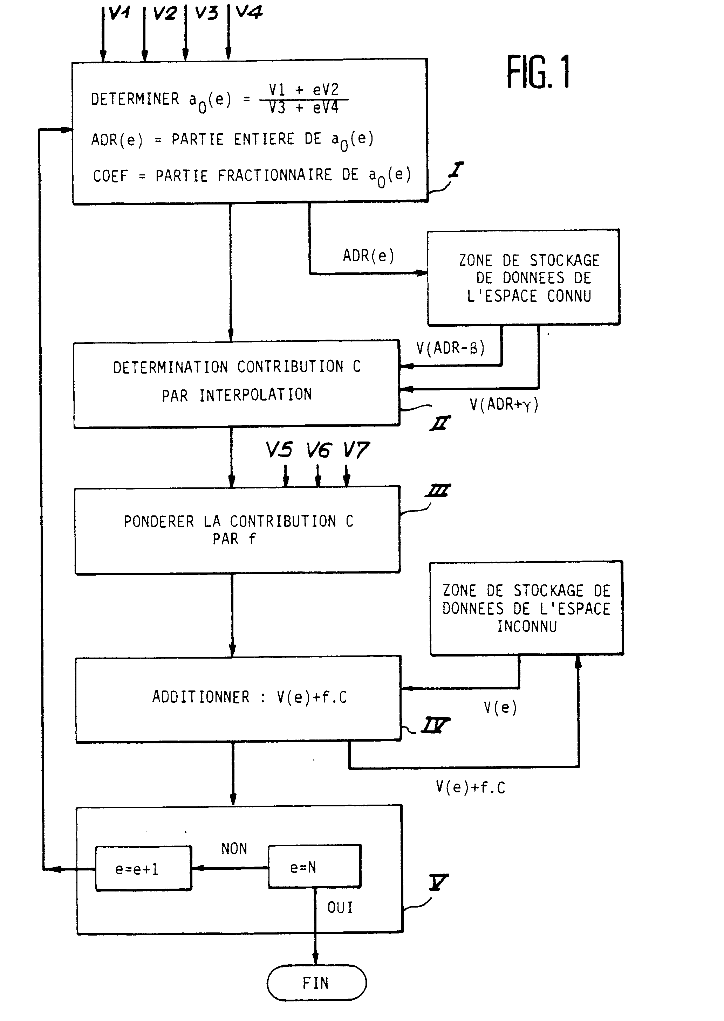

La figure 1 permet de montrer sous forme d'une succession de blocs, les différentes étapes du procédé selon l'invention.

Tout d'abord l'on rappelle quelques définitions.

L'on entend par espace discret connu un espace bidimensionnel (2D) ou tridimensionnel (3D) numérisé, c'est-à-dire un espace défini par un ensemble de points élémentaires correspondant à des pixels en 2D ou à des voxels en 3D.

Les coordonnées des points sont numérisées dans l'espace image ou volume et dans l'espace projection. Ces points sont référencés par leurs indices i, j, k dans l'espace inconnu, l, m, n dans l'espace connu.

L'on rappelle également que dans l'opération de reprojection, l'espace image ou volume est connu et l'espace projection est à calculer. Dans l'opération de rétroprojection, l'espace projection est connu et l'espace image ou volume est à calculer.

Selon le procédé objet de l'invention, la phase élémentaire telle qu'elle a été précédemment définie, comporte un ensemble d'étapes qui vont permettre de déterminer la contribution à la valeur d'un point de l'espace inconnu à partir de la valeur du point correspondant (et de son voisinage) de l'espace connu, de façon unifiée pour les opérations de reprojection et de rétroprojection, pour un grand nombre de géométries d'acquisition.

Cette phase comporte pour cela une étape de détermination d'un indice ou adresse dans l'espace connu, suivie d'une détermination de la contribution par interpolation sur les données avoisinant cette adresse et enfin une étape de pondération de cette contribution.

L'ensemble de ces étapes se renouvelle par itération d'un indice apparaissant dans la détermination de l'adresse, jusqu'à ce que cet indice ait atteint sa borne supérieure N, c'est-à-dire le nombre de points élémentaires caractérisant le nombre de points suivant un axe de l'espace inconnu (taille de l'espace).

Détermination de l'adresse (étape I).

D'une manière générale cette étape consiste, en fonction de l'adresse d'un point de l'espace à calculer, à déterminer l'adresse du point correspondant dans l'espace connu. Le calcul d'adresse est étroitement lié à la géométrie d'acquisition et fait intervenir les formules affines de changement de repère. Cependant conformément à l'invention, la détermination de l'adresse dans la phase élémentaire est réduite à la détermination de la partie entière ADR de la valeur $a_0(e)$ par la relation suivante :

$$a_0(e) = \frac{V1 + eV2}{V3 + eV4}$$

dans laquelle les paramètres V1, V2, V3, V4 sont prédéterminés en fonction de la géométrie d'acquisition et du type d'opération effectuée (rétroprojection ou reprojection) et des ensembles monodimensionnels considérés.

$e$ est l'indice d'itération correspondant à l'adresse d'un point de l'espace inconnu.

Détermination de la contribution C (étape II).

Dans cette étape, l'on utilise les points appartenant à l'espace connu, avoisinant l'adresse ADR précédemment calculée pour effectuer une interpolation.

L'interpolation se fait à partir de procédés classiques. Il peut s'agir d'interpolation d'ordre zéro ou du plus proche voisin ou d'ordre supérieur. Pour une interpolation d'ordre supérieur, pour une adresse fournie par l'étape de calcul d'adresse, plusieurs données de l'espace connu au voisinage de cette adresse doivent être extraites.

Les coefficients d'interpolation utilisés dans cette étape sont déterminés généralement à partir de la partie fractionnaire de $a_0(e)$.

Pondération de la contribution (étape III)

La pondération consiste à appliquer un facteur de pondération f dont les paramètres V5, V6, V7 sont prédéterminés et fonction de la géométrie d'acquisition du type d'opération et des ensembles monodimensionnels considérés.

Addition de la contribution pondérée à l'adresse en cours (étape IV)

Cette étape consiste à ajouter la contribution pondérée au point considéré de l'espace à calculer soit à calculer V(e) + f.C, V(e) étant la valeur à l'adresse e du point de l'espace inconnu avant calcul, V(e) + f.C sa valeur après le calcul.

Itération de l'indice e (étape V)

Cette dernière étape consiste à incrémenter l'indice e et à recommencer l'ensemble des étapes précédentes jusqu'à atteinte de la valeur N (N correspondant au nombre de points élémentaires sur la ligne de cet espace).

La suite de la description va permettre de détailler les différentes étapes selon différentes applications correspondant chacune à un choix particulier de type de géométrie d'acquisition.

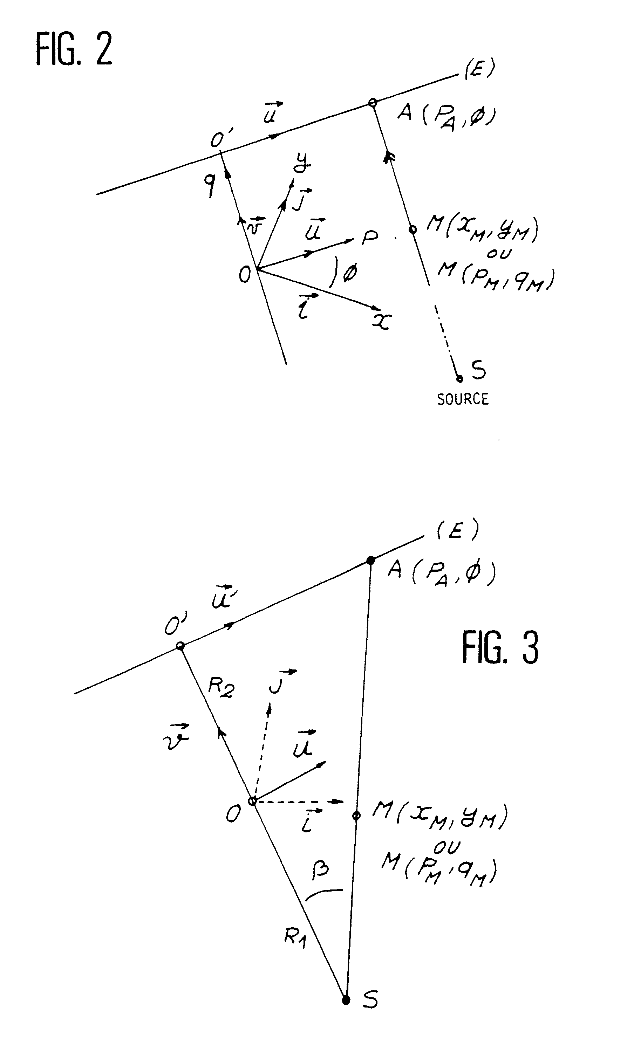

Tout d'abord l'on rappelle au moyen des figures 2, 3 et 4 respectivement le principe d'une géométrie parallèle 2D, éventail 2D, et conique 3D. S est la source réelle ou virtuelle de rayonnement.

Dans les figures 2 et 3, un point M de l'espace objet est caractérisé par ses coordonnées $M(x_M, y_M)$ ou $M(p_M, q_M)$, $(x_M, y_M)$ dans un repère $(0, \vec{i}, \vec{j})$, et $(p_M, q_M)$ dans un repère $(0, \vec{u}, \vec{v})$ qui est le repère lié à la projection d'angle $\Phi$. Les points de la projection sur l'axe E sont notés $A(p_A, \Phi)$, $p_A$ étant la coordonnée liée au repère $(0', u)$.

Dans le cas éventail de la figure 3, le rayon R1 caractérise la distance source-centre O du repère $(0, \vec{u}, \vec{v})$ et R2 la distance centre du repère au détecteur $O'$.

Les coordonnées sont échantillonnées dans l'espace objet par :

$x(i) = X_0 + i \Delta X$, i et j étant des nombres entiers

$y(j) = Y_0 + j \Delta Y$

$\Delta X$ et $\Delta Y$ étant les pas d'échantillonnage.

Les coordonnées sur l'axe E de projection est donnée par la relation :

$p(l) = P_0 + l\Delta P$, l étant un nombre entier

$\Delta P$ étant le pas d'échantillonnage.

Un point M est repéré dans le repère $0, \vec{i}, \vec{j}$ par $x_M$ et $y_M$ et dans le repère $0, \vec{u}, \vec{v}$ par $p_M$ et $q_M$ avec :

$p_M = x_M \cos\Phi + y_M \sin\Phi$

$q_M = -x_M \sin\Phi + y_M \cos\Phi$

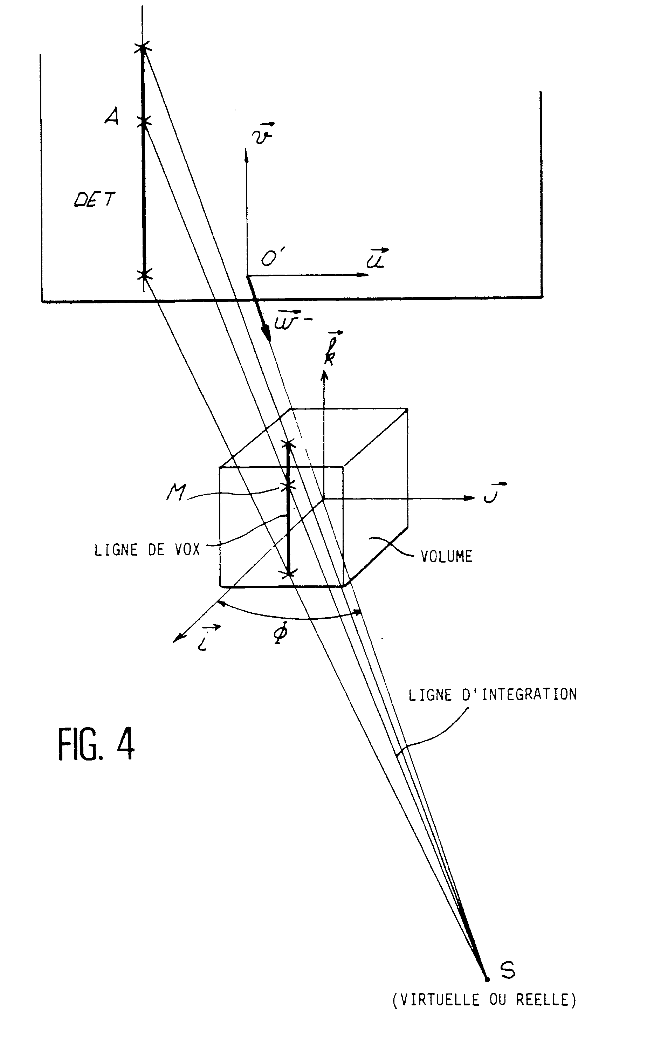

Dans le cas d'une géométrie d'acquisition conique (3D) telle que représentée sur la figure 4, l'ensemble DET formé par les points A relatifs aux points M d'une colonne de volume (VOL), forme une colonne dans la projection (DET) parallèle à l'axe de rotation k. La phase élémentaire permet également dans ce cas de géométrie conique de mettre en relation des ensembles d'éléments (de l'espace connu et de l'espace à reconstruire) appartenant à des droites parallèles à l'axe de rotation k.

Le procédé objet de l'invention s'applique tout à fait, à la reprojection et à la rétroprojection en géométrie conique et en géométrie parallèle puisque la phase élémentaire comporte des itérations sur les éléments de l'espace à reconstruire ne nécessitant qu'une opération pour déterminer l'adresse (dans l'ensemble de l'espace connu) de l'élément correspondant.

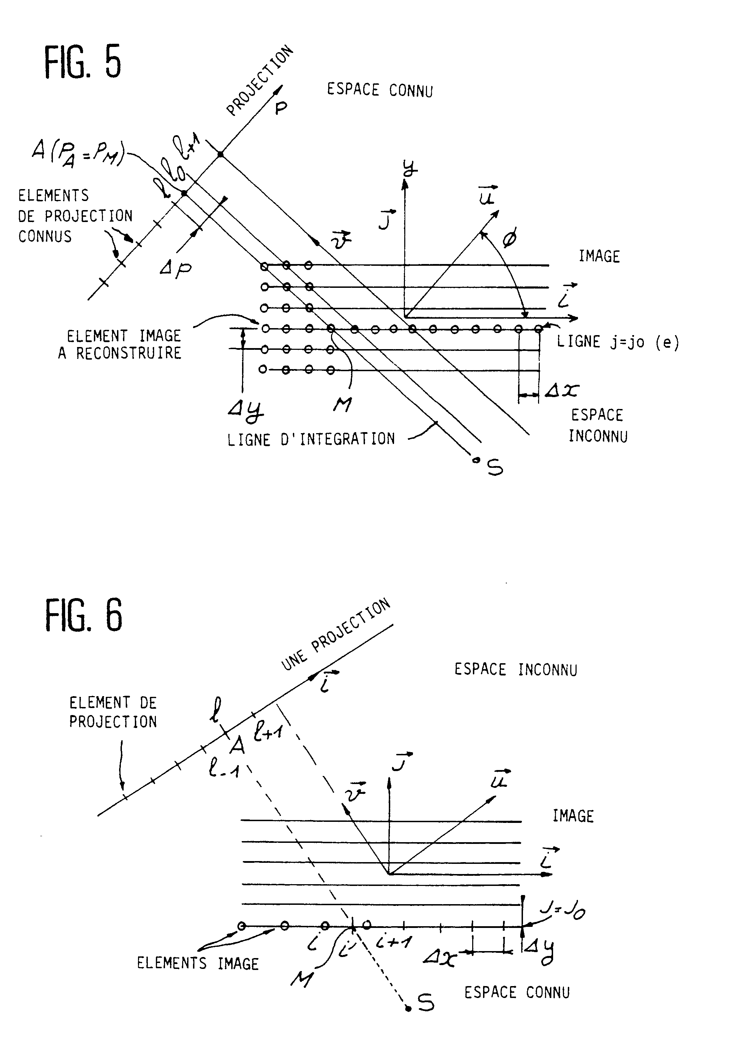

La figure 5 représente le cas de la rétroprojection pour une géométrie parallèle 2D. Dans ce cas les paramètres V1, V2, V3, V4 servant à la détermination de l'adresse sont précalculés.

L'espace image inconnu est échantillonné comme :

$x(i) = X_0 + i\Delta X$

$y(j) = Y_0 + j\Delta Y$

$z(k) = 0$ d'où $k = 0$

L'espace projection connu est échantillonné comme :

$p(l) = P_0 + l\Delta P$

$q(m) = 0$ donc $m = 0$

$\Phi(n)$

Les paramètres V1, V2, V3, V4 sont précalculés de la manière suivante :

$m = 0$, n fixé à $n_0$, $k = 0$

l est fonction de i

j est donc fixé à $j_0$

$V3 = 1$

$V4 = 0$

$e = i$

$V1 = L_0 + j_0 \Delta J$

$V2 = \Delta I$

ou $m = 0$, n fixé à $n_0$, $k = 0$

l est fonction de j

i est fixé à $i_0$

$V3 = 1$

$V4 = 0$

$e = j$

$V1 = L_0 + i_0 \Delta I$

$V2 = J$

et avec

$$\Delta I = \frac{\Delta X}{\Delta P} . \cos \phi(n_0)$$

$$\Delta J = \frac{\Delta Y}{\Delta P} . \sin \phi(n_0)$$

$$L_0 = \frac{X_0}{\Delta P} . \cos \phi(n_0) + \frac{Y_0}{\Delta P} . \sin \phi(n_0) - \frac{P_0}{\Delta P} .$$

$X_0$, $Y_0$, $\Delta P$, $P_0$, $\sin \Phi(n_0)$, $\cos \Phi(n_0)$ $\Delta X$, $\Delta Y$ étant connus.

Dans le cas de la figure 5, l'espace de projection connu est indicé par 1, m = 0, et n = $n_0$. L'espace inconnu est l'espace image indicé i, j, k ; k = 0, i ou j sont fixés ; l'adresse recherchée est $l_0(i)$ si j est fixé à $j_0$, ou $l_0(j)$ si i est fixé à $i_0$.

La figure 6 représente le cas de la reprojection pour une géométrie parallèle 2D. Dans ce cas les coordonnées sont échantillonnées de la façon suivante :

$x(l) = X_0 + l\Delta X$

$y(n) = Y_0 + n\Delta Y$

$z(m) = 0$

d'une part pour l'espace image connu.

et

$p(i) = P_0 + i\Delta P$

$q(k) = 0$ d'ou k = 0

$\Phi(j)$

d'une part pour l'espace projection inconnu.

Les paramètres V1, V2, V3 et V4 utilisés pour la détermination sont précalculés de la manière suivante :

m = 0, k = 0, j = $j_0$

n fixé à $n_0$

e = i et $l_0(i)$ est recherchée

V3 = 1

V4 = 0

$$V1 = \frac{P_0}{\Delta X \cos \phi(j_0)} - (Y_0 + n_0 \Delta Y) . \frac{\sin \phi(j_0)}{\Delta X . \cos \phi(j_0)} - \frac{X_0}{\Delta X}$$

$$V2 = \frac{\Delta P}{\Delta X \cos \phi(j_0)}$$

ou

m = 0, k = 0, j = $j_0$

l fixé à $l_0$

e = i et $n_0(i)$ est recherchée

V3 = 1

V4 = 0

11

$$V1 = \left( \frac{P_0}{\Delta Y \sin\phi(j_0)} - \frac{(X_0 + l_0 \Delta X)\cos\phi(j_0)}{\Delta Y \sin\phi(j_0)} - \frac{Y_0}{\Delta Y} \right)$$

$$et \quad V2 = \left( \frac{\Delta P}{\Delta Y \sin\phi j_0} \right)$$

$X_0$, $Y_0$, $\Delta P$, $P_0$, $\sin\Phi(j_0)$, $\cos\Phi(j_0)$, $\Delta X$, $\Delta Y$ étant connus.

Dans le cas de la figure 6, l'espace connu est l'espace image indicé par l, m, n, m = 0, l ou n étant fixés ; l'espace inconnu est l'espace projection indicé par i, j, k, k = 0 et j = $j_0$, l'adresse recherchée est $l_0(i)$ si n est fixé à $n_0$, ou $n_0(i)$ si l est fixé à $l_0$.

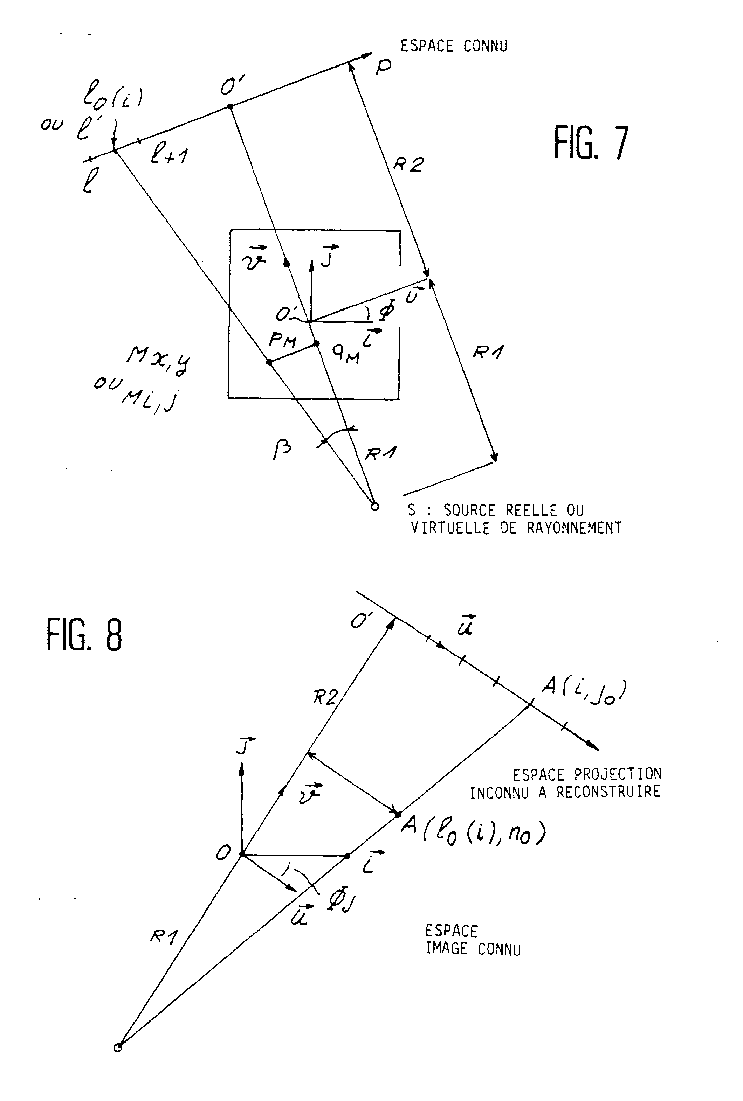

La figure 7 représente le cas de la rétroprojection en géométrie éventail. Dans ce cas les coordonnées des espaces sont échantillonnés comme :

| espace image inconnu | espace projection connu |
|---|---|
| $x(i) = X_0 + i\Delta X$<br>$y(j) = Y_0 + j\Delta Y$<br>$z(k) = 0, k = 0$ | $p(l) = P_0 + l\Delta P$<br>$q(m) = 0, m = 0$<br>$\Phi(n)$ |

V1, V2, V3, V4 sont précalculés de la manière suivante :
m = 0, k = 0, n fixé à $n_0$
e = i et j fixé à $j_0$
On cherche $l_0(i)$

$$V1 = \frac{1}{\Delta P} \left\{ X_0 \cos\phi(n_0) + y(j_0)\sin\phi(n_0) - \frac{P_0}{R1+R2} \left[ R1 + y(j_0)\cos\phi(n_0) - X_0 \sin\phi(n_0) \right] \right\}$$

$$V2 = \frac{1}{\Delta P} \left\{ \Delta X \cos\phi(n_0) + \frac{P_0 \Delta X}{R1+R2} \cdot \sin\phi(n_0) \right\}$$

$V3 = R1 - X_0 \sin\Phi(n_0) + y(j_0)\cos\Phi(n_0)$
$V4 = -\Delta X \sin\Phi(n_0)$
ou m = 0, k = 0, n fixé à $n_0$, e = j et i fixé à $i_0$.
On cherche $l_0(j)$

$$V1 = \frac{1}{\Delta P} \left\{ Y_0 \sin \phi(n_0) + x(i_0) \cos \phi(n_0) - \frac{P_0}{R1+R2} \left[ R1 + Y_0 \cos \phi(n_0) - x(i_0) \sin \phi(n_0) \right] \right\}$$

$$V2 = \frac{1}{\Delta P} \left\{ \Delta Y \sin \phi(n_0) - \frac{P_0}{R1+R2} \Delta Y \cos \phi(n_0) \right\}$$

$V3 = R1 - x(i_0) \sin \Phi(n_0) + Y_0 \cos \Phi(n_0)$

$V4 = \Delta Y \cos \Phi(n_0)$

l'ensemble des coefficients servant à précalculer ces paramètres étant connu.

Dans le cas de la figure 7, l'espace de projection connu est indicé par l, m, n, m = 0, n = $n_0$, l'espace inconnu est l'espace image indicé par i, j, k, k = 0, i ou j fixés, l'adresse recherchée est $l_0(i)$ si j est fixé à $j_0$ ou $l_0(j)$ si i est fixé à $i_0$.

R1 : distance source - centre du repère objet.

R2 : distance centre du repère objet - détecteur.

La figure 8 représente le cas de la reprojection en géométrie en éventail. Dans ce cas les coordonnées des espaces sont échantillonnées de la façon suivante :

espace image inconnu

$x(l) = X_0 + l \Delta X$

$y(n) = Y_0 + n \Delta Y$

$z(m) = 0$ donnant m = 0

espace projection connu

$p(i) = P_0 + i \Delta P$

$q(k) = 0$ donnant k = 0

$\Phi(j)$

Dans ce cas les paramètres V1, V2, V3 et V4 servant à la détermination de l'adresse sont précalculés de la manière suivante :

m = 0, k = 0, j = $j_0$, n = $n_0$, e = i

$l_0(i)$ est recherché.

$$V1 = \frac{P_0 \left[ R1 + y(n_0) \cos \phi(j_0) - X_0 \sin \phi(j_0) \right]}{R1 + R2}$$

$$y(n_0) \sin \phi(j_0) - X_0 \cos \phi(j_0).$$

$$V2 = \frac{\left[ R1 + y(n_0) \cos \phi(j_0) - X_0 \sin \phi(j_0) \right]}{R1 + R2} \Delta p$$

$$V3 = \frac{P_0 \Delta X}{R1+R2} \sin \phi(j_0) + \Delta X \cos \phi(j_0)$$

$$V4 = \frac{\Delta P . \Delta X \sin \phi(j_0)}{R1 + R2}$$

ou bien $m = 0$, $k = 0$, $j = j_0$, $e = i$, $l$ fixé à $l_0$
$n_0(i)$ est recherché.

$$V1 = \left\{ \frac{P_0}{R1+R2} \left[ R1 - x(l_0 \sin\phi(j_0) + Y_0 \cos\phi(j_0)) \right] \right.$$

$$\left. - x(l_0) \cos\phi(j_0) - Y_0 \sin\phi(j_0) \right\}$$

$$V2 = \frac{\Delta P'}{R1+R2} \left[ R1 - x(l_0) \sin\phi(j_0) + Y_0 \cos\phi(j_0) \right]$$

$$V3 = \Delta Y \left[ \sin\phi(j_0) - \frac{P_0}{R1+R2} . \cos\phi(j_0) \right]$$

$$V4 = - \Delta Y \frac{\Delta P}{R1+R2} . \cos\phi(j_0)$$

l'ensemble des coefficients servant à précalculer ces paramètres étant connu.

Dans le cas de la figure 8, l'espace connu est l'espace image indicé par $l$, $m$, $n$, $m = 0$, $l$ ou $n$ étant fixé ; l'espace inconnu est l'espace projection indicé par $i$, $j$, $k$, $k = 0$ $j = j$ ; l'adresse recherchée est $l_0(i)$ si $n$ est fixé à $n_0$ ou $n_0(i)$ si $l$ est fixé à $l_0$.

R1 = distance source - centre du repère objet
R2 = distance centre du repère objet - détecteur

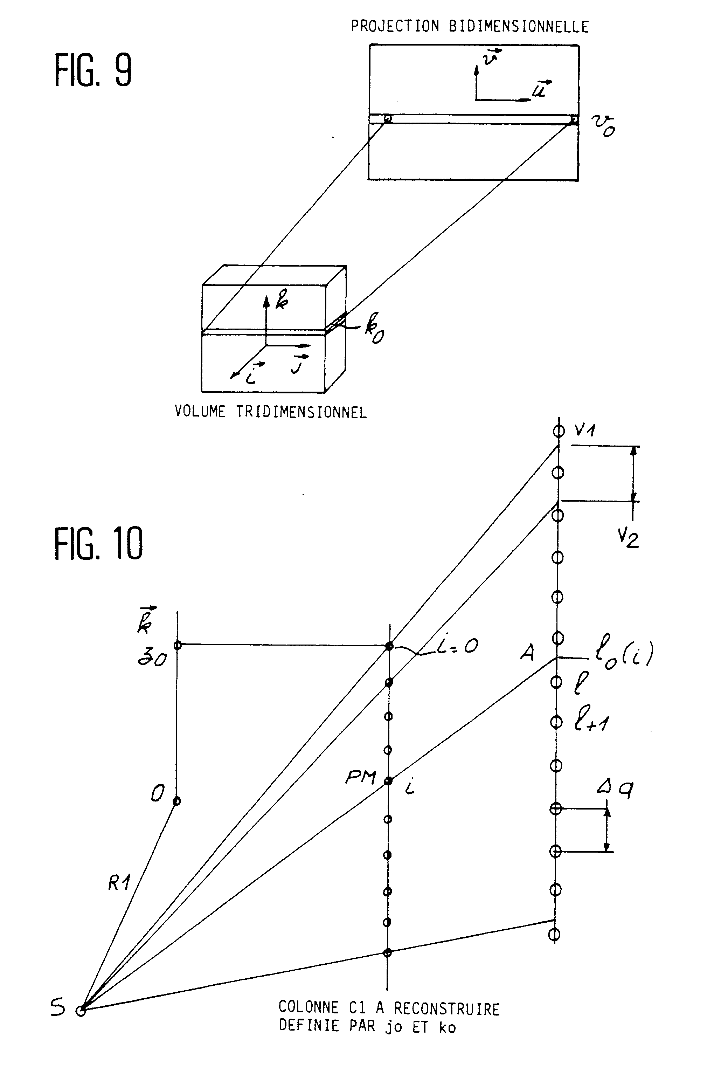

La figure 9 représente le cas de rétroprojections et reprojections en géométrie parallèle 3D.

Un plan d'altitude $k_0$ se projette toujours dans la projection d'angle $\Phi$ (quel que soit $\Phi$) à une altitude constante $v_0$. La rétroprojections ou la reprojections dans cette géométrie est une succession de rétroprojections et reprojections 2D en géométrie parallèle. La détermination de l'adresse dans ce cas est telle que déjà décrite à propos des cas de rétroprojection et reprojection en géométrie parallèle 2D.

La figure 10 représente le cas d'une rétroprojection en géométrie conique 3D. Dans ce cas la partie de l'espace à reconstruire figé est pour $k = k_0$ et $j = j_0$ qui donne $x(k_0)$ et $y(j_0)$ figé.

La partie de l'espace connu figé est pour $n = n_0$ qui fixe $\Phi$ à $\Phi(n_0)$ et $m = m'$ fixé, puisque $m$ est fonction de $k$ et $j$. L'adresse recherchée est $l_0(i)$. Les paramètres V1, V2, V3, V4 servant à la détermination de l'adresse sont précalculés de la façon suivante :

V3 = 1
V4 = 0

$$V1 = \frac{Z_0 . C - Q_0}{\Delta Q}$$

$$V2 = \frac{C \Delta Z}{\Delta Q}$$

L'ensemble des coefficients intervenant dans ces calculs est connu. En effet, les coordonnées sont échantillonnées comme suit :

$x(k) = X_0 + k\Delta X$

$y(j) = Y_0 + j\Delta Y$

$z(i) = Z_0 + i\Delta Z$

$\Phi(n)$

$p(m) = P_0 + m\Delta P$

$q(l) = Q_0 + l\Delta Q$

$$C = \frac{R1 + R2}{R2 + l_M(k_0, j_0, n_0)}$$

$l_n$ dépend de $k_0$, $j_0$ et $n_0$

$l_M(k_0, j_0, n_0) = x(k_0)\sin\Phi(n_0) - y(j_0)\cos\Phi(n_0)$

$R1$ = distance source - centre du repère objet

$R2$ = distance centre du repère objet - détecteur

Dans le cas d'une reprojection en géométrie conique 3D, l'adresse recherchée est $l_0(i)$.

La partie de l'espace à reconstruire qui est figée est pour $k = k_0$ et $j = j_0$ fixant ainsi $\Phi$ à $\Phi(k_0)$ et $p$ à $p-(j_0)$.

La première dimension que l'on fixe dans l'espace connu définit un plan $m = m_0$ qui fixe l'abscisse $x$ à $x(m_0)$. La deuxième dimension est fixée à $y(n')$ car $n$ est fonction de $j$, $k$ et de $m$.

Les paramètres V1, V2, V3, V4 servant à la détermination de l'adresse sont précalculés de la façon suivante :

$$V1 = \frac{Q_0 C - Z_0}{\Delta Z}$$

$$V2 = \frac{C\Delta Q}{\Delta Z}$$

$$\text{avec } C = \frac{R_2 + l_M(k_0, m_0, n')}{R1 + R2}$$

$$n' = \frac{P(j_0)\left[R2 + x(m_0)\sin\phi(k_0) - Y_0\cos\phi(k_0)\right]}{\Delta Y\left[(R1+R2)\sin\phi(k_0) + P(j_0)\cos\phi(k_0)\right]} -$$

$$\frac{(R1+R2)\left[x(m_0)\cos\phi(k_0) + Y_0\sin\phi(k_0)\right]}{\Delta Y\left[(R1+R2)\sin\phi(k_0) + P(j_0)\cos\phi(k_0)\right]}$$

et avec $l_M(k_0, m_0, n') = x(m_0)\sin\Phi(k_0) - y(n')\cos\Phi(k_0)$

$V3 = 1$

$V4 = 0$

$R1$ : distance source - centre du repère objet.

R2 : distance centre du repère objet-détecteur.

L'ensemble des autres coefficients intervenant dans ce précalcul est connu.

L'espace a été échantillonné de la façon suivante :

$x(m) = X_0 + m\Delta X$

$y(n) = Y_0 + n\Delta Y$

$z(l) = Z_0 + l\Delta Z$

$\Phi(k)$

$p(j) = P_0 + j\Delta P$

$q(i) = Q_0 + i\Delta Q$

Conformément au procédé de l'invention, l'étape de pondération consiste à appliquer un facteur de pondération f tel que :

$$f = \frac{V5}{(V6 + eV7)^2}$$

les paramètres V5, V6, V7 étant fonction de la géométrie d'acquisition et du type de projection effectuée.

Dans le cas de rétroprojection en géométrie parallèle 2D, conique, parallèle et conique 3D et de reprojection parallèle 2D et 3D,

V5 est choisi par l'utilisateur

$V6 = 1$

$V7 = 0$

Dans le cas de rétroprojection en éventail, V5 est choisi égal à $(R1 + R2)^2$, $V6 = V3$, $V7 = V4$.

Dans le cas de reprojection éventail 2D et conique :

$V5 = 1$

$V6 = 1$

$V7 = 0$

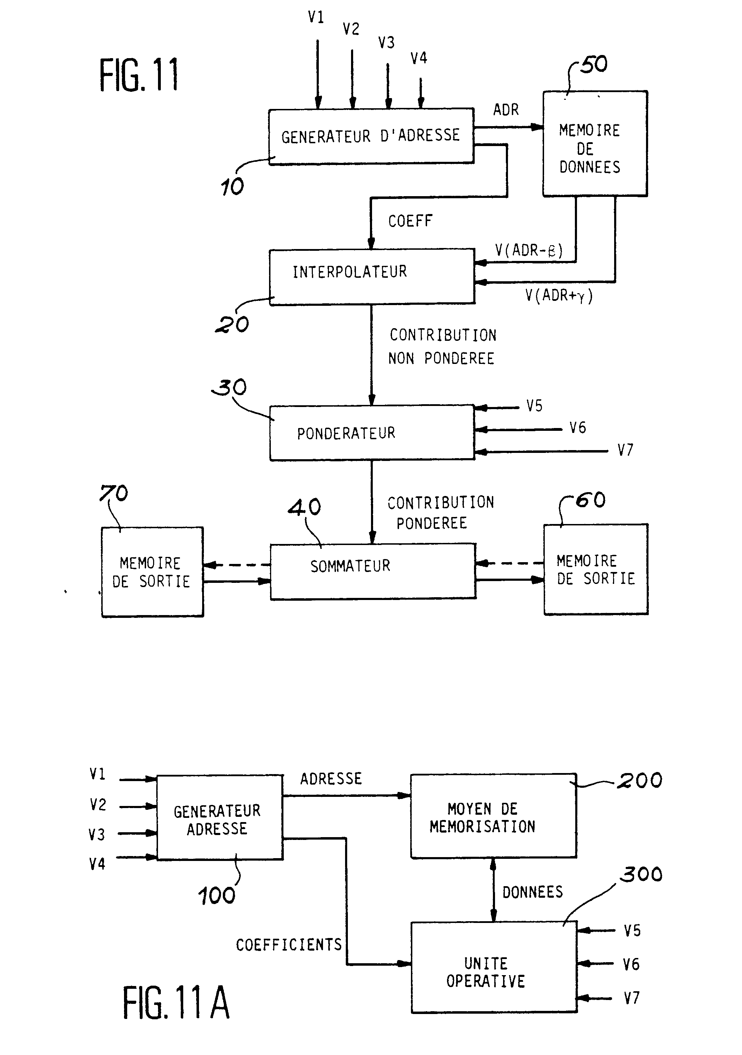

Sur la figure 11, l'on a représenté le schéma d'un dispositif permettant de mettre en oeuvre l'invention. Ce dispositif a une architecture pipe-line. Ce dispositif comporte des moyens de génération d'adresse 10, des moyens de détermination des contributions par interpolation 20.

Le dispositif comporte également des moyens de pondération 30, des moyens de sommation 40.

Le dispositif comporte en outre des moyens de stockage des données de l'espace connu 50, et des moyens de stockage des données de l'espace inconnu 60 et 70. Les moyens de génération d'adresse reçoivent les paramètres V1, V2, V3, V4 et sont aptes à effectuer le calcul de l'adresse ADR à déterminer. Le calcul est réalisé par des opérateurs incrémentaux constituant le générateur qui effectuent à chaque cycle une opération du type incrémental. Les moyens de mémorisation 50 sont adressés par les moyens de génération d'adresse 10 et délivrent les $(\alpha + 1)$ valeurs consécutives $V(ADR-\beta)$ à $V(ADR + \gamma)$ avec $\beta + \gamma = \alpha$, $\beta$ et $\gamma$ entiers positifs.

Les moyens d'interpolation reçoivent les $(\alpha + 1)$ valeurs $V(ADR-\beta)$ à $V(ADR + \gamma)$ et déterminent à chaque cycle la contribution non pondérée. Le coefficient COEF utilisé pour effectuer l'interpolation est par exemple donné par le générateur d'adresse, ce coefficient étant généralement la partie fractionnaire de l'adresse. Le nombre $\alpha$ est égal à 1 pour une interpolation linéaire.

Les moyens de pondération 30 réalisent le produit de la contribution non pondérée avec le facteur f. Pour ce calcul, les moyens de pondération reçoivent les paramètres V5, V6, V7 et la donnée issue de l'interpolateur 20. En particulier, pour l'opération de rétroprojection éventail 2D, les paramètres V6 et V7 peuvent être issus du générateur d'adresse 10.

Les moyens de sommation 40 permettent d'ajouter la contribution ainsi pondérée au voxel (ou pixel) traité.

La zone de donnée de sortie peut être, comme représenté sur la figure 11, constituée de deux bancs mémoire 60 et 70 travaillant en ping-pong.

Sur la figure 11A, l'on a représenté le schéma d'un second dispositif permettant de mettre en oeuvre l'invention. Le dispositif comporte un générateur d'adresse 100, des moyens de mémorisation 200 des données de l'espace connu et de l'espace inconnu. Le dispositif comporte également une unité opérative 300 pour la détermination de la contribution, pour la pondération et pour la sommation conformément à l'invention. Le générateur d'adresse 100 reçoit V1, V2, V3, V4 et est apte à fournir l'adresse ADR. Le calcul est réalisé par des opérateurs incrémentaux. Les moyens de mémorisation 200 sont adressés par le générateur d'adresse 100 et délivrent les $\alpha + 1$ valeurs $V(ADR-\beta)$ à $V(ADR + \gamma)$ avec $\beta + \gamma = \alpha$, $\beta$ et $\gamma$ entiers positifs.

L'unité opérative 300 reçoit les $\alpha + 1$ valeurs V(ADR-$\beta$) à V(ADR + $\gamma$) des moyens de mémorisation 200, les coefficients d'interpolation relatifs à ces valeurs fournies par le générateur d'adresse 100 et reçoit V5, V6, V7 pour le calcul du facteur de pondération, elle calcule avec ceux-ci la contribution pondérée ; elle comprend un moyen de sommation pour ajouter la contribution pondérée à la valeur correspondante de l'espace inconnu fournie par les moyens de mémorisation 200 adressés par le générateur d'adresse 100. Cette valeur est ensuite retournée aux moyens de mémorisation 200, en particulier, les paramètres V5, V6, V7 peuvent être issus du généateur d'adresse lors de la rétroprojection éventail 2D.

L'invention concerne également une application du procédé à la reconstruction par synthèse et inversion de la transformée de RADON qui met en jeu quatre espaces.

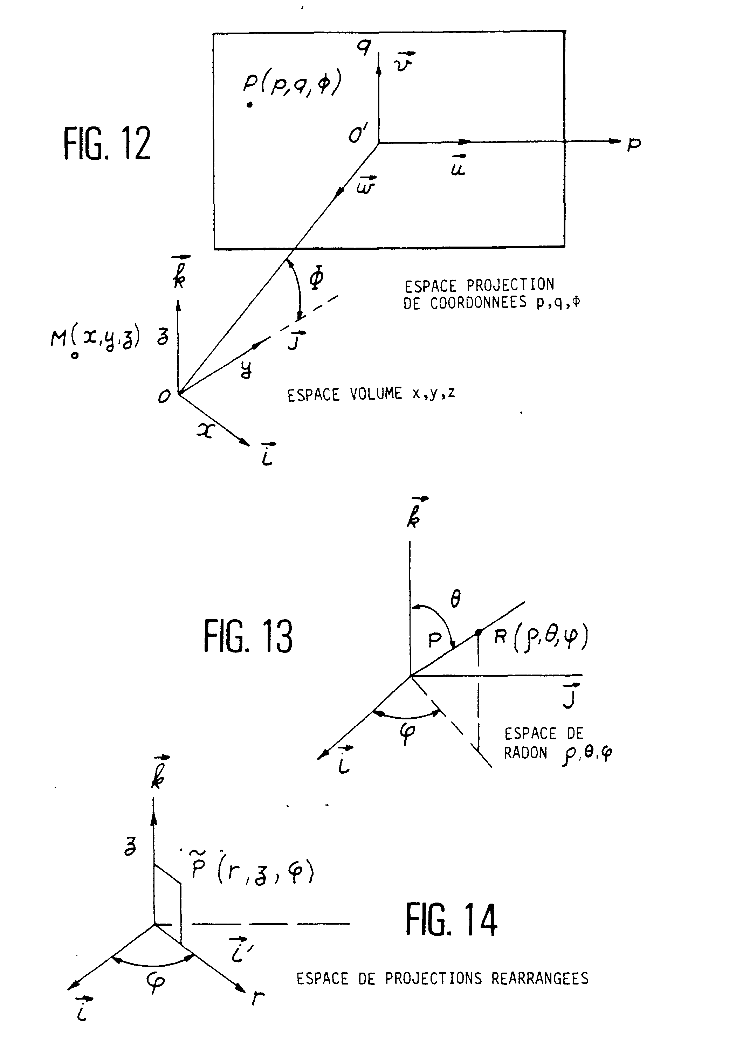

La figure 12 montre l'espace volume à reconstruire de coordonnées x, y, z et l'espace projection connu de coordonnées p, q, $\Phi$.

La figure 13 montre l'espace de Radon de coordonnées p, $\theta$, $\phi$ et le repère $\theta$, $\vec{i}$, $\vec{j}$, $\vec{k}$ lié à l'espace du volume à reconstruire.

La figure 14 montre l'espace des projections réarrangées de coordonnées r, z, $\phi$.

Le but de cette méthode est de passer de l'espace projection connu à l'espace à reconstruire et donc inconnu. La reconstruction s'effectue en 3 étapes

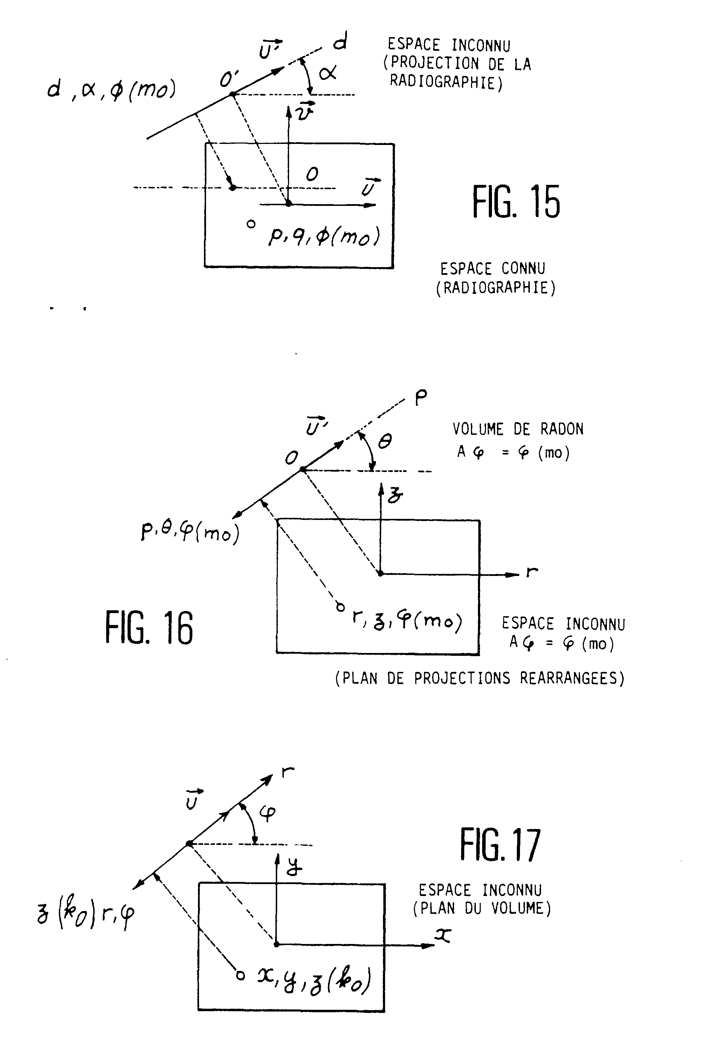

La première étape consiste en une reprojection bidimensionnelle en géométrie parallèle de l'ensemble des radiographies prises une à une comme des images formant ainsi un espace bidimensionnel image connu ; l'espace inconnu associé à cette image repérée par $\Phi(m_0)$ est l'espace de projection de coordonnées d, $\alpha$, comme le montre la figure 15.

Une série de reprojections bidimensionnelles sur la totalité des radiographies permet d'obtenir un volume de données intermédiaire de coordonnées d, $\alpha$, $\Phi$. Une opération de rééchantillonnage sur ce volume d, $\alpha$, $\Phi$ permet d'obtenir aisément l'espace de RADON de coordonnées P, $\theta$, $\phi$.

Après filtrage des données de l'espace de Radon, la deuxième (figure 16) étape est mise en oeuvre et on considère l'espace connu comme étant l'espace de Radon de coordonnées P, $\theta$, $\phi$ l'espace inconnu l'epace des projections réarrangées de coordonnées r, z, $\phi$. Une rétroprojection bidimensionnelle en géométrie parallèle est effectuée en prenant comme espace de projection connu chaque projection P, $\theta$ à $\phi = \phi(m_0) = $ constante et comme espace bidimensionnel à reconstruire l'image de coordonnées r, z à $\phi = \phi$-$(m_0) = $ constante. En répétant ainsi cette opération pour l'ensemble des valeurs de $\phi(m)$, l'espace des projections réarrangées de coordonnées r, z, $\phi$ est obtenu.

Après normalisation des données de projections réarrangées r, z, $\phi$, la (figure 17) troisième étape est mise en oeuvre et on considère l'espace connu comme étant l'espace des projections réarrangées de coordonnées r, z, $\phi$ et l'espace inconnu l'espace volume à reconstruire de coordonnées x, y, z. Une rétroprojection bidimensionnelle en géométrie parallèle est effectuée en prenant comme espace de projection connu chaque projection r, $\phi$ à $z = z(k_0) = $ constante et comme espace bidimensionnel à reconstruire l'image de coordonnées x, y à $z = z(k_0) = $ constante. En répétant ainsi cette opération pour l'ensemble des valeurs de z(k), l'espace volume à reconstruire de coordonnées x, y, z est obtenu.

Le tableau A suivant permet de synthétiser l'application décrite.

## TABLEAU A

| Espace connu | | Espace recherché |
|---|---|---|
| projection radiographiques $p$, $q$, $\phi(m_0)$ | 1ère ETAPE ————————— reprojection 2D géométrie parallèle | Radon intermédiaire $d$, $\alpha$, $\phi$ $(m_0)$ |
| RADON Intermédiaire $d$, $\alpha$, $\phi$ | ————————— Rééchantillonnage | Radon $P$, $\theta$, $\varphi$ |
| RADON $P$, $\theta$, $\varphi(m0)$ | 2ème ETAPE ————————— Rétroprojection 2D géométrie parallèle | Projections réarangées $r$, $z$, $\varphi(m_0)$ |
| Projections réar- $z$, $\varphi$, $z(k_0)$ | 3ème ETAPE ————————— Rétroprojection 2D géométrie parallèle | Volume final recherché $x$, $y$, $z(k_0)$ |

**Revendications**

1. Procédé de détermination d'un espace à partir d'un espace discret connu par reprojection ou rétroprojection, pour la reconstruction d'une image bidimensionnelle ou tridimensionnelle d'un corps à analyser, à partir d'un ensemble de projections obtenu, au moyen d'un dispositif d'acquisition de géométrie définie comportant une source de rayonnement et un ensemble de détecteurs, l'un des espaces étant défini par un ensemble de points élémentaires repérés respectivement suivant trois axes par des indices (l, m, n) correspondant aux coordonnées suivant ces axes ; l'autre espace étant défini par un ensemble de points élémentaires que l'on repère également respectivement par des indices (i,j,k) suivant trois axes de cet espace, ces indices (i, j, k) correspondant aux coordonnées suivant ces axes, la détermination de l'espace inconnu est obtenue par le calcul de la valeur numérique de chaque point de l'espace inconnu à partir de la détermination des contributions apportées par les valeurs numériques de points correspondants de l'espace connu, le procédé étant caractérisé en ce qu'il comporte une phase élémentaire consistant à déterminer de façon itérative pour chaque point d'un ensemble monodimensionnel de points de l'espace inconnu portés par un axe E donné de cet espace, la contribution apportée par le point correspondant et éventuellement par les points voisins d'un ensemble monodimensionnel de points de l'espace connu portés par un axe F de cet espace, cette phase comportant de façon itérative pour chaque point les étapes suivantes :

- déterminer l'indice associé à la coordonnée sur l'axe F du point correspondant de l'espace connu, en prenant la partie entière ADR de l'expression généralisée $a_0(e)$, avec

$$a_0(e) = \frac{V1 + eV2}{V3 + eV4}$$

e étant l'indice d'itération correspondant à la coordonnée sur l'axe E du point considéré de l'espace inconnu et V1, V2, V3, V4 étant des paramètres constants dans la phase élémentaire, l'ensemble de ces paramètres étant déterminé préalablement à cette phase en fonction de la géométrie d'acquisition choisie ; du type d'opération (reprojection ou rétroprojection) effectuée et des ensembles monodimensionnels considérés,

- déterminer la contribution C à apporter à la valeur numérique du point considéré de l'espace inconnu par interpolation sur les valeurs numériques du point correspondant d'indice ADR et éventuellement des points voisins,

- pondérer cette contribution par un facteur f déterminé par la relation suivante :

$$f = \frac{V5}{(V6 + eV7)^2}$$

V5, V6, V7 étant des paramètres constants dans la phase élémentaire, l'ensemble de ces paramètres étant déterminé préalablement à cette phase en fonction de la géométrie d'acquisition choisie, du type d'opération et des ensembles monodimensionnels considérés,

- additionner cette contribution pondérée à la valeur numérique du point considéré de l'espace inconnu, déterminée lors de phases élémentaires précédentes ayant mis en correspondance le point de l'espace inconnu à des points d'autres espaces monodimensionnels connus, l'ensemble des contributions obtenues à la fin du procédé de détermination de l'espace inconnu constituant la valeur finale de ce point.

2. Procédé de détermination d'un espace à partir d'un espace discret connu, selon la revendication 1 dans lequel la phase élémentaire représente une opération de rétroprojection en géométrie parallèle, l'espace connu étant un ensemble de données de projection indicé par l,m,n ; m et n étant fixés, l'espace inconnu étant l'espace image indicé par i, j, k, (j et k) ou (i et k) étant fixés ; l'indice recherché $a_0(e)$ est soit l'indice $l_0(j)$ lorsque i et k sont fixés, l'axe E étant indicé par j et l'axe F par l, soit l'indice $l_0(i)$ lorsque j et k sont fixés, l'axe E étant indicé par i et l'axe F par l; et l'on choisit alors :

$V3 = 1$
$V4 = 0$
et pour i fixé à $i_0$, $k = 0$, $m = 0$, $n = n_0$, $l_0(j)$ étant recherché
$V1 = L_0 + i_0 \Delta I$
$V2 = \Delta J$
$e = j$
ou pour j fixe à $j_0$, $k = 0$, $m = 0$, $n = n_0$, $l_0(i)$ étant recherché
$V1 = L_0 + j_0 \Delta J$
$V2 = \Delta I$
$e = i$
les termes $L_0$, $\Delta I$, $\Delta J$ étant prédéterminés, $l_0$ étant un nombre entier réel de partie entière l.

3. Procédé de détermination d'un espace à partir d'un espace discret connu, selon la revendication 1 dans lequel la phase élémentaire représente une opération de reprojection en géométrie parallèle, l'espace connu étant l'espace image indicé par l, m, n; (m et n) ou (1 et m) étant fixés, l'espace inconnu étant l'ensemble de données de projection indicée i, j, k, j et k étant fixés ; l'indice $a_0(e)$ recherché est l'indice $l_0(i)$ ou $n_0(i)$, l'axe E est alors indicé par i et l'axe F est indicé par l ou n et l'on choisit alors :
m fixé à 0, n à $n_0$, j à $j_0$, k à 0, on cherche $l_0(i)$
$V3 = 1$
$V4 = 0$
$V1 = h_1 (n_0, j_0)$
$V2 = \Delta L_1 (j_0)$
$e = i$
ou
m fixé à 0, l à $l_0$, j à $j_0$, k à 0; on cherche $n_0(i)$

V3 = 1

V4 = 0

V1 = $h_2$ $(l_0, j_0)$

V2 = $\Delta L_2$ $(j_0)$

e = i

Les termes $h_1$, $h_2$, $\Delta L_1$ et $\Delta L_2$ étant prédéterminés et $n_0$ et $l_0$ sont des nombres réels de partie entière respectivement n et l.

4. Procédé de détermination d'un espace à partir d'un espace discret connu, selon la revendication 1 dans lequel la phase élémentaire représente une opération de rétroprojection en géométrie en éventail à pas linéaires constants, l'espace connu est l'ensemble de données de projection indicées par l,m,n ; m et n étant fixés, l'espace inconnu étant l'espace image indicé par i, j, k, (i et k) ou (j et k) étant fixés, l'indice recherché $a_0(e)$ est soit l'indice $l_0(i)$ soit $l_0(j)$ l'axe E étant indicé par i ou par j et l'axe F par l et l'on choisit alors :

$k = 0$, $m = 0$, $n = n_0$, $j = j_0$, $l_0(i)$ étant recherché,

V1 = $h_3$ $(j_0, n_0)$

V2 = $h_4$ $(n_0)$

V3 = $h_5$ $(j_0, n_0)$

V4 = $h_6$ $(n_0)$

e = i

ou : $k = 0$, $m = 0$, $n = n_0$, $i = i_0$, $l_0(j)$ étant recherché,

V1 = $h'_3$ $(i_0, n_0)$

V2 = $h'_4$ $(n_0)$

V3 = $h'_5$ $(i_0, n_0)$

V4 = $h'_6$ $(n_0)$

e = j.

les termes $h_3$, $h_4$, $h_5$, $h_6$, $h'_3$, $h'_4$, $h'_5$, $h'_6$ étant prédéterminés et $l_0$ est un nombre réel de partie entière l.

5. Procédé de détermination d'un espace à partir d'un espace discret connu, selon la revendication 1 dans lequel la phase élémentaire représente une opération de reprojection en géométrie en éventail à pas linéaires constants, l'espace connu étant l'espace image indicé par l, m, n ; (m et n) ou (l et m) étant fixés, l'espace inconnu étant l'ensemble de données de projection indicées par i, j, k, j et k étant fixés, l'indice recherché $a_0(e)$ est l'indice $l_0(i)$ ou $n_0(i)$ l'axe E étant indicé par i et l'axe F par l ou n et l'on choisit alors :

m fixé à 0, n à $n_0$, j à $j_0$, k à 0, $l_0(i)$ étant recherché,

V1 = $h_7$ $(n_0, j_0)$

V2 = $h_8$ $(n_0, j_0)$

V3 = $h_9$ $(j_0)$

V4 = $h_{10}$ $(j_0)$

e = i

ou : m fixé à 0, l à $l_0$, j à $j_0$, k à 0, $n_0(i)$ étant recherché,

V1 = $h'_7$ $(l_0, j_0)$

V2 = $h'_8$ $(l_0, j_0)$

V3 = $h'_9$ $(j_0)$

V3 = $h'_{10}$ $(j_0)$

e = i

Les termes $h_7$, $h_8$, $h_9$, $h_{10}$, $h'_7$, $h'_8$, $h'_9$, $h'_{10}$ étant prédéterminés et $n_0$, $l_0$ étant des nombres réels de partie entière respectivement n et l.

6. Procédé de détermination d'un espace à partir d'un espace discret connu, selon la revendication 1 dans lequel la phase élémentaire représente une opération de rétroprojection en géométrie conique ; l'espace inconnu étant un espace image indicé par i, j, k (j et k étant fixés), l'espace connu étant l'espace de projection indicé par l, m, n (n étant fixé et m fixé puisque fonction de j et k), l'indice recherché $a_0(e)$ est l'indice $l_0(i)$ l'axe E est indicé par i et l'axe F par l, et l'on choisit alors :

V3 = 1

V4 = 0

$$V1 = \frac{z_0 C - Q_0}{\Delta Q'}$$

$$V2 = \frac{C . \Delta Z}{\Delta Q}$$

les termes $Z_0$, $C$, $Q_0$, $\Delta Z$ et $\Delta Q$ étant prédéterminés et $I_0$ étant un nombre réel dont la partie entière est $I$.

7. Procédé de détermination d'un espace à partir d'un espace discret connu, selon la revendication 1 dans lequel la phase élémentaire représente une reprojection en géométrie conique, l'espace inconnu étant l'espace de projection indicé par i, j, k, (j et k étant fixés), et l'espace connu étant l'espace image indicé par I, m, n (m étant fixé, n étant fixé puisque fonction de j et k) ; l'indice recherché $a_0(e)$ est l'indice $I_0(i)$ l'axe E est indicé par i et l'axe F par I et l'on choisit alors :

$$V3 = 1$$

$$V4 = Q_0 \frac{C-Z_0}{\Delta Z}$$
$$V1 = \frac{C-Z_0}{\Delta Z}$$
$$V2 = \frac{C\Delta Q}{\Delta Z}$$

les termes $Z_0$, $Q_0$, $C$, $\Delta Z$ et $\Delta Q$ étant prédéterminés et $I_0$ étant un nom réel dont la partie entière est $I$.

8. Procédé de détermination d'un espace à partir d'un espace discret connu, selon les revendications 1 et 2, ou 1 et 3 ou 1 et 6, caractérisé en ce qu'une géométrie parallèle et conique dans le cas ou la phase élémentaire représente une rétroprojection et pour une géométrie parallèle lorsque cette phase représente une reprojection, le facteur de pondération f est déterminé en prenant :

$$V7 = 0$$

$$V6 = 1 \text{ et } V5 \text{ est prédéterminé.}$$

9. Procédé de détermination d'un espace à partir d'un espace discret connu selon les revendications 1 et 4, caractérisé en ce que dans l'étape de pondération pour une géométrie éventail dans le cas d'une rétroprojection, le facteur de pondération f est déterminé en prenant :

V5 prédéterminé à partir des paramètres du dispositif d'acquisition

$$V6 = V3$$

$$V7 = V4$$

10. Procédé de détermination d'un espace à partir d'un espace discret connu, selon les revendications 1 et 5 ou 1 et 7, caractérisé en ce que dans l'étape de pondération pour une géométrie en éventail et conique dans le cas de la reprojection, le facteur de pondération f est déterminé en prenant :

$$V5 = 1$$

$$V6 = 1$$

$$V7 = 0$$

11. Dispositif de mise en oeuvre du procédé selon l'une quelconque des revendications précédentes, caractérisé en ce qu'il comporte en outre le dispositif d'acquisition :

- des moyens de génération d'adresse recevant les paramètres V1 à V4, délivrant l'adresse ADR qui est la partie entière de $a_0(e)$ ;

- des moyens de mémorisation des valeurs numériques des points de l'espace connu, adressées par les moyens de génération, délivrant l'ensemble de $(\alpha + 1)$ valeurs numériques des points de l'espace connu de $V(ADR-\beta)$ à $V(ADR+\gamma)$ ($\beta$ et $\gamma$ entiers positifs ; $\beta + \gamma = \alpha$) correspondant à l'indice ADR, étant l'ordre d'interpolation ;

- des moyens d'interpolation recevant les valeurs numériques $V(ADR-\beta)$ à $V(ADR+\gamma)$ contenues en mémoire et adressables par l'indice ADR et déterminant à la fin de l'interpolation une contribution non pondérée à la valeur numérique de chaque point correspondant de l'espace inconnu ;

- des moyens de pondération recevant chaque contribution non pondérée et les paramètres V5, V6, V7 pour délivrer chaque contribution pondérée ;

- des moyens de sommation pour additionner à la valeur numérique du point en cours de l'espace inconnu, la contribution pondérée relative à ce point en cours ;

- des moyens de mémorisation contenant la valeur en cours.

12. Dispositif de mise en oeuvre du procédé selon l'une quelconque des revendications 1 à 10, caractérisé en ce qu'il comporte outre le dispositif d'acquisition :

- des moyens de générations d'adresse (100) recevant les paramètres V1 à V4, délivrant l'adresse ADR qui est la partie entière de $a_0(e)$ ;

- des moyens de mémorisation (200) des valeurs numériques des points de l'espace connu, adressées par les moyens de génération d'adresse, délivrant l'ensemble des données $V(ADR-\beta)$ à $V(ADR+\gamma)$ (avec $\beta + \gamma = \alpha$, $\beta$ et $\gamma$ entiers positifs) correspondant à l'indice ADR, $\alpha$ étant l'ordre d'interpolation et délivrant les valeurs numériques des données de l'espace inconnu adressées par les moyens de génération d'adresse et recevant les valeurs numériques des données de l'espace inconnu après traitement :
- une unité opérative d'interpolation, de pondération, de sommation déterminant la contribution non pondérée, la contribution pondérée et déterminant à la fin la valeur numérique du point en cours en additionnant à la valeur précédente de ce point en cours, la contribution pondérée.

13. Application du procédé selon l'une quelconque des revendications 1 à 10, à la reconstruction d'images par synthèse et inversion de la transformée de RADON.

14. Application du procédé selon la revendication 13, caractérisée en ce que la reconstruction comporte trois étapes :

- une première étape consistant en une reprojection bidimensionnelle en géométrie parallèle permettant d'obtenir une transformée de RADON ;

- une deuxième étape consistant en une rétroprojection bidimensionnelle en géométrie parallèle permettant d'obtenir des projections réarrangées ;

- une troisième étape consistant en une rétroprojection bidimensionnelle à géométrie parallèle permettant d'obtenir le volume final recherché.

V1  V2  V3  V4

FIG.1

DETERMINER $a_0(e) = \dfrac{V1 + eV2}{V3 + eV4}$

ADR(e) = PARTIE ENTIERE DE $a_0(e)$

COEF = PARTIE FRACTIONNAIRE DE $a_0(e)$          I

ADR(e) →

ZONE DE STOCKAGE
DE DONNEES DE
L'ESPACE CONNU

DETERMINATION CONTRIBUTION C
PAR INTERPOLATION

II

V(ADR-β)

V(ADR+γ)

V5  V6  V7

III

PONDERER LA CONTRIBUTION C
PAR f

ZONE DE STOCKAGE DE
DONNEES DE L'ESPACE
INCONNU

ADDITIONNER : V(e)+f.C

IV

V(e)

V(e)+f.C

NON

e=e+1   ←   e=N

V

OUI

FIN

# FIG. 2

# FIG. 3

FIG. 4

## FIG. 5

## FIG. 6

FIG. 7

ESPACE CONNU

S : SOURCE REELLE OU
VIRTUELLE DE RAYONNEMENT

FIG. 8

ESPACE PROJECTION
INCONNU A RECONSTRUIRE

ESPACE
IMAGE CONNU

FIG. 9

PROJECTION BIDIMENSIONNELLE

$\vec{v}$ $\vec{u}$

$v_0$

$k$
$k_0$
$\vec{i}$ $\vec{j}$

VOLUME TRIDIMENSIONNEL

FIG. 10

$v1$

$v2$

$\vec{k}$
$3_0$

$i=0$

$A$ $\ell_0(i)$
$\ell$

$\ell+1$

$0$

PM $i$

$\Delta q$

$R1$

$S$

COLONNE C1 A RECONSTRUIRE
DEFINIE PAR jo ET ko

FIG. 11

V1  V2  V3  V4

GENERATEUR D'ADRESSE
10

ADR

MEMOIRE DE DONNEES
50

COEFF

INTERPOLATEUR
20

V(ADR-β)

V(ADR+γ)

CONTRIBUTION NON PONDEREE

PONDERATEUR
30

V5

V6

V7

CONTRIBUTION PONDEREE

MEMOIRE DE SORTIE
70

SOMMATEUR
40

MEMOIRE DE SORTIE
60

V1

V2

V3

V4

GENERATEUR ADRESSE
100

ADRESSE

MOYEN DE MEMORISATION
200

DONNEES

COEFFICIENTS

UNITE OPERATIVE
300

V5

V6

V7

FIG. 11 A

FIG. 12

$P(p,q,\phi)$

ESPACE PROJECTION
DE COORDONNEES p,q,$\Phi$

$M(x,y,z)$

ESPACE VOLUME x,y,z

FIG. 13

$R(\rho,\theta,\varphi)$

ESPACE DE
RADON $\rho,\theta,\varphi$

$\tilde{P}(r,z,\varphi)$

FIG. 14

ESPACE DE PROJECTIONS REARRANGEES

FIG. 15

ESPACE INCONNU
(PROJECTION DE LA
RADIOGRAPHIE)

$d, \alpha, \phi(mo)$

$p, q, \phi(mo)$

ESPACE CONNU
(RADIOGRAPHIE)

FIG. 16

VOLUME DE RADON
$A \varphi = \varphi (mo)$

$p, \theta, \varphi(mo)$

$r, z, \varphi(mo)$

ESPACE INCONNU
$A \varphi = \varphi (mo)$

(PLAN DE PROJECTIONS REARRANGEES)

FIG. 17

$z (k_0) r, \varphi$

ESPACE INCONNU
(PLAN DU VOLUME)

$x, y, z (k_0)$

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl.5) |
|---|---|---|---|
| A | EP-A-0 107 253 (N.V. PHILIPS' GLOEILAMPENFABRIEKEN) <br> * Résumé; pages 1-4,31-36 * <br> ----- | 1-7 | G 06 F  15/62 |

**DOMAINES TECHNIQUES RECHERCHES (Int. Cl.5)**

G 06 F  15/62D

Le présent rapport a été établi pour toutes les revendications

| Lieu de la recherche | Date d'achèvement de la recherche | Examinateur |
|---|---|---|
| LA HAYE | 07-09-1990 | CHATEAU J.P. |